# EUROPEAN PATENT APPLICATION

(11) **EP 1 970 536 A2**
(43) Date of publication of application: **17.09.2008**
(21) Application number: 08102417.6
(22) Date of filing: 07.03.2008
(51) Int. Cl.: F01D 5/30, F02K 3/04

(54) **Blade attachment retention device**

(30) Priority: 12.03.2007 US 685011
(71) Applicant: Honeywell International Inc., Morristown NJ 07960 (US)
(72) Inventor: Chunduru, Srinivas J., Chandler, AZ 85249 (US); Gebre-Giorgis, Yoseph, Phoenix, AZ 85048 (US); Wilson, Bruce D., Chandler, AZ 85248 (US); Nolcheff, Nick A., Chandler, AZ 85249 (US); Hanley, David, Scottsdale, AZ 85254 (US); Lentz, Jeff, Chandler, AZ 85226 (US)
(74) Representative: Buckley, Guy Julian

(57) **Abstract**

A component for a gas turbine engine includes a rotor disk, a plurality of blade attachments, a plurality of retention flanges, and a plurality of retention tabs. The rotor disk has a plurality of slots formed in an outer surface thereof. Each blade attachment has an attachment region configured to be partially disposed within one of the slots. The plurality of retention flanges extend from the rotor disk outer surface, to thereby at least inhibit axial movement of the blade attachment, when the attachment region is fitted inside its corresponding slot. A retention tab extends from each attachment region and engages one of the retention flanges.

## Description

This invention was made with Government support under contract no. NAS3-01136 awarded by the National Aeronautics Space Administration (NASA). The Government has certain rights in this invention.

### FIELD OF THE INVENTION

The present invention relates to gas turbine engines and, more particularly, to improved gas turbine engine components.

### BACKGROUND OF THE INVENTION

A gas turbine engine may be used to power various types of vehicles and systems. A particular type of gas turbine engine that may be used to power aircraft is a turbofan gas turbine engine. A turbofan gas turbine engine may include, for example, five major sections, a fan section, a compressor section, a combustor section, a turbine section, and an exhaust section.

The fan section is positioned at the front, or "inlet" section of the engine, and includes a fan that induces air from the surrounding environment into the engine, and accelerates a fraction of this air toward the compressor section. The remaining fraction of air induced into the fan section is accelerated into and through a bypass plenum, and out the exhaust section. The compressor section raises the pressure of the air it receives from the fan section to a relatively high level. The compressed air from the compressor section then enters the combustor section, where a ring of fuel nozzles injects a steady stream of fuel. The injected fuel is ignited by a burner, which significantly increases the energy of the compressed air.

The high-energy compressed air from the combustor section then flows into and through the turbine section, causing rotationally mounted turbine blades to rotate and generate energy. Specifically, high-energy compressed air impinges on turbine vanes and turbine blades, causing the turbine to rotate. The air exiting the turbine section is exhausted from the engine via the exhaust section, and the energy remaining in this exhaust air aids the thrust generated by the air flowing through the bypass plenum.

Certain of these gas turbine engine components, such as the fan section, the compressor section, and the turbine section, typically include a plurality of rotor blades coupled to a rotor disk that is configured to rotate. In certain gas turbine engines, the rotor blades are slidably disposed in various slots formed in the rotor disk. While such a configuration is generally effective, it is possible that the blades may experience inadvertent movement in an axial direction during engine operation.

Accordingly, there is a need for an improved turbine engine and/or turbine engine component with a mechanism to prevent, or at least inhibit, axial movement of blades while the turbine engine is operating. The present invention addresses at least this need.

### SUMMARY OF THE INVENTION

The present invention provides a component for a gas turbine engine. In one embodiment, and by way of example only, the component comprises a rotor disk, a plurality of blade attachments, a plurality of retention flanges, and a plurality of retention tabs. The rotor disk has a plurality of slots formed in an outer surface thereof. Each blade attachment has an attachment region configured to be partially disposed within one of the slots. The plurality of retention flanges extend from the rotor disk outer surface, to thereby at least inhibit axial movement of the blade attachment, when the attachment region is fitted inside its corresponding slot. A retention tab extends from each attachment region and engages one of the retention flanges.

The invention also provides a fan section for a gas turbine engine. In one embodiment, and by way of example only, the fan section comprises an inlet, a rotor disk, a plurality of blade attachments, a plurality of retention flanges, and a plurality of retention tabs. The inlet is adapted to receive air from a surrounding environment. The rotor disk has a plurality of slots formed in an outer surface thereof. Each blade attachment has an attachment region configured to be partially disposed within one of the slots. The plurality of retention flanges extend from the rotor disk outer surface, to thereby at least inhibit axial movement of the blade attachment, when the attachment region is fitted inside its corresponding slot. A retention tab extends from each attachment region and engages one of the retention flanges.

The invention also provides a gas turbine engine. In one embodiment, and by way of example only, the gas turbine engine comprises a compressor, a combustor, a turbine, and a fan section. The compressor has an inlet and an outlet and operable to receive accelerated air through the inlet, compress the accelerated air, and supply the compressed air through the outlet. The combustor is coupled to receive at least a portion of the compressed air from the compressor outlet, and is operable to supply combusted air. The turbine is coupled to receive the combusted air from the combustor and at least a portion of the compressed air from the compressor, and to generate energy therefrom. The fan section comprises an inlet, a plurality of blades, a plurality of retention flanges, and a plurality of retention tabs. The inlet is adapted to receive air from a surrounding environment. The rotor disk has an outer surface forming a plurality of slots. The plurality of blades are attached to the rotor disk. Each blade has an attachment region configured to attach the blade to the rotor disk by fitting within a corresponding slot. The plurality of blades are configured to accelerate a portion of the air, and to supply the accelerated air to the compressor. The plurality of retention flanges extend from the rotor disk outer surface, to thereby at least inhibit axial movement of the blade attachment, when the attachment region is fitted inside its corresponding slot. A retention tab extends from each attachment region and engages one of the retention flanges.

Other independent features and advantages of the preferred airfoil and method will become apparent from the following detailed description, taken in conjunction with the accompanying drawings which illustrate, by way of example, the principles of the invention.

### BRIEF DESCRIPTION OF THE DRAWINGS

FIG. 1 is a simplified cross section side view of an exemplary multi-spool turbofan gas turbine jet engine according to an embodiment of the present invention;

FIG. 2 is a plan view of a portion of a rotor component, including a rotor disk and a blade attachment, that may be used in the engine of FIG. 1, shown from a front side view;

FIG. 3 is a plan view of a portion of the rotor component of FIG. 2, shown from a back side view;

FIG. 4 is a plan view of a portion of the rotor component of FIG. 2, including a slot formed in, and a retention flange extending from, the rotor disk; and

FIG. 5 is a plan view of a portion of the rotor component of FIG. 2, including a blade attachment with a retention tab extending therefrom.

### DETAILED DESCRIPTION OF A PREFERRED EMBODIMENT

Before proceeding with the detailed description, it is to be appreciated that the described embodiment is not limited to use in conjunction with a particular type of turbine engine or in a particular section or portion of a gas turbine engine. Thus, although the present embodiment is, for convenience of explanation, depicted and described as being implemented in a fan section of a turbofan gas turbine jet engine, it will be appreciated that it can be implemented in various other sections and in various types of engines.

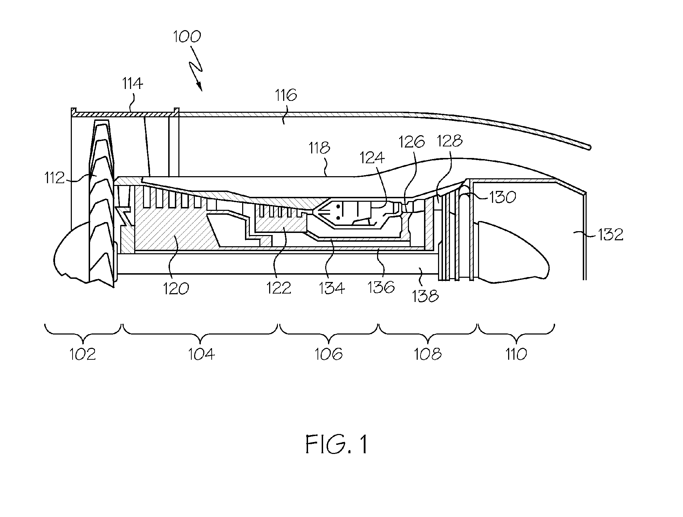

An exemplary embodiment of a turbofan gas turbine jet engine 100 is depicted in FIG. 1, and includes an intake section 102, a compressor section 104, a combustion section 106, a turbine section 108, and an exhaust section 110. The intake section 102 includes a fan 112, which is mounted in a fan case 114. The fan 112 draws air into the intake section 102 and accelerates it. A fraction of the accelerated air exhausted from the fan 112 is directed through a bypass section 116 disposed between the fan case 114 and an engine cowl 118, and provides a forward thrust. The remaining fraction of air exhausted from the fan 112 is directed into the compressor section 104.

The compressor section 104 includes one or more compressors. In the depicted embodiment, the compressor section 104 includes two compressors, an intermediate pressure compressor 120, and a high pressure compressor 122. However, the number of compressors may vary in other embodiments. The intermediate pressure compressor 120 raises the pressure of the air directed into it from the fan 112, and directs the compressed air into the high pressure compressor 122. The high pressure compressor 122 compresses the air still further, and directs a majority of the high pressure air into the combustion section 106. In addition, a fraction of the compressed air bypasses the combustion section 106 and is used to cool, among other components, turbine blades in the turbine section 108. In the combustion section 106, which includes an annular combustor 124, the high pressure air is mixed with fuel and combusted. The high-temperature combusted air is then directed into the turbine section 108.

The turbine section 108 includes one or more turbines. In the depicted embodiment, the turbine section 108 includes three turbines disposed in axial flow series, a high pressure turbine 126, an intermediate pressure turbine 128, and a low pressure turbine 130. However, it will be appreciated that the number of turbines, and/or the configurations thereof, may vary, as may the number and/or configurations of various other components of the exemplary engine 100. The high-temperature combusted air from the combustion section 106 expands through each turbine, causing it to rotate. The air is then exhausted through a propulsion nozzle 132 disposed in the exhaust section 110, providing addition forward thrust. As the turbines rotate, each drives equipment in the engine 100 via concentrically disposed shafts or spools. Specifically, the high pressure turbine 126 drives the high pressure compressor 122 via a high pressure spool 134, the intermediate pressure turbine 128 drives the intermediate pressure compressor 120 via an intermediate pressure spool 136, and the low pressure turbine 130 drives the fan 112 via a low pressure spool 138. As mentioned above, the engine 100 of FIG. 1 is merely exemplary in nature, and can vary in different embodiments.

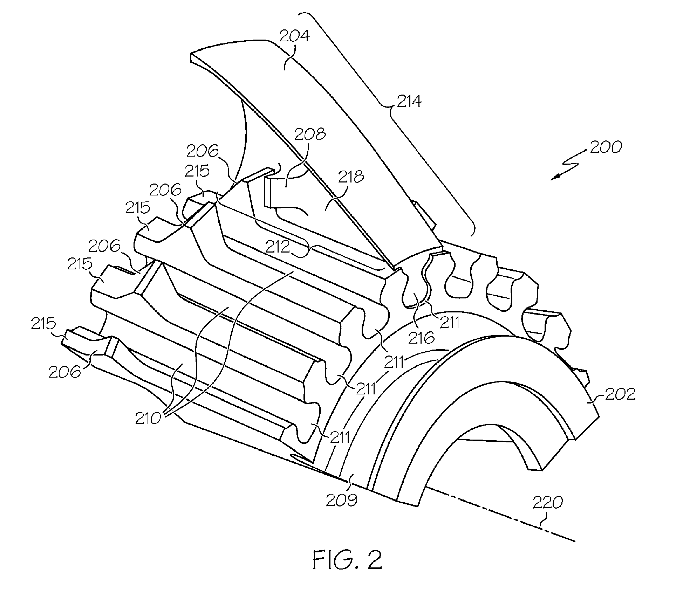

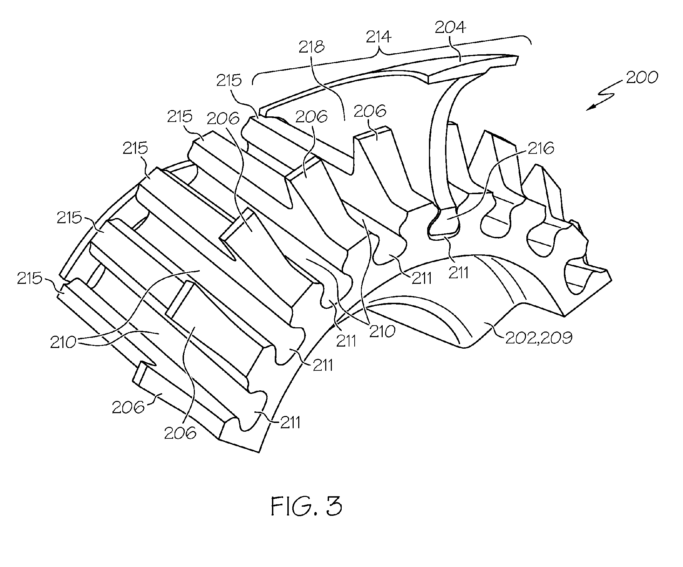

FIGs. 2 and 3 depict, from a front side view and a back side view, respectively, a portion of a rotor component 200. The rotor component 200 can be used in one or more above-described engine components, including, among others, the fan 112, and/or in various other components of various other different types of engines and/or other devices. The rotor component 200 includes a rotor disk 202 (for ease of reference, only a portion of the rotor disk is depicted in FIGs. 2 and 3), a plurality of blade attachments 204 (for ease of reference, only one blade attachment 204 is depicted in FIGs. 2 and 3), a plurality of retention flanges 206, and a plurality of retention tabs 208 (for ease of reference, only one retention tab 208 is depicted in FIG. 2).

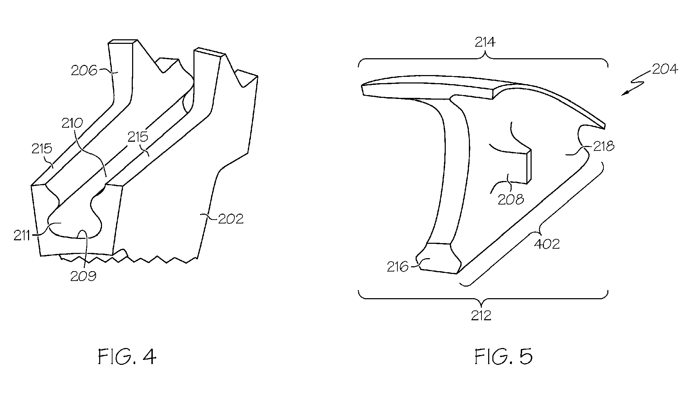

FIGs. 4 and 5 provide close-up views of different portions of the rotor component 200. Specifically, FIG. 4 provides a close-up, isolated view of a portion of the rotor component 200, including a portion of the rotor disk 202 with a corresponding retention flange 206, while FIG. 5 provides a close-up, isolated view of another portion of the rotor component 200, including a blade attachment 204 with a retention tab 208. FIGs. 4 and 5 will be discussed together with FIGS. 2 and 3 for ease of reference.

With reference first to FIGs. 2, 3, and 4, the rotor disk 202 includes an outer surface 209, and a plurality of slots 210 formed in the outer surface 209. The rotor disk 202 is preferably made of titanium, steel, or a nickel-based alloy, although this may vary. In the depicted embodiment, the slots 210 are equally, circumferentially spaced around the outer surface 209; however, this may differ in other embodiments. As shown in FIG. 2, in the depicted embodiment the slots 210 are sloped with respect to an engine axis 220; however, this also may vary in other embodiments.

Each slot 210 is configured to slidably receive therein a different, corresponding blade attachment 204, and each slot 210 preferably includes a slot opening 211 for insertion of the corresponding blade attachment 204. The slots 210 are separated by disk posts 215, which are also formed in the outer surface 209, and which extend parallel to the slots 210. The disk posts 215 are also preferably made of titanium, steel, or a nickel-based alloy. However, the disk posts 215 may be made of one or more other materials, and/or may vary in size, number, and/or configuration.

With reference now to FIGs. 2, 3, and 5, each blade attachment 204 includes an attachment region 212 and a platform 214. The attachment region 212 is configured to be slidably disposed within a corresponding slot 210 of the outer surface 209 of the rotor disk 202. The attachment region 212 includes one or more dovetails 216 and a shank 218. The dovetails 216 are formed in a bottom portion 402 of the attachment region 212, and are adapted to fit within the slot opening 211 of a corresponding slot 210. The shank 218 extends between the bottom portion 402 and the platform 214. The dovetails 216 and the shank 218 are preferably made of titanium, steel, or a nickel-based alloy; however, this may vary.

The platform 214 of each blade attachment 204 is coupled to a non-depicted airfoil. The plurality of airfoils are configured to rotate when the attachment region 212 of each blade attachment 204 is fit into its corresponding slot 210 and the engine and the rotor component 200 are operating.

With reference again to FIGs. 2, 3, and 4, the plurality of retention flanges 206 extend from the rotor disk outer surface 209. Preferably each retention flange 206 extends from one of the disk posts 215 on either side of a corresponding slot 210, although this may vary. Each retention flange 206 at least inhibits axial movement of a corresponding blade attachment 204 when the attachment region 212 is inserted inside its corresponding slot 210. As shown in FIGs. 2, 3, and 4, in the depicted embodiment the retention flanges 206 each extend at least partially radially from the rotor disk outer surface 209; however, this may vary. The retention flanges 206 are preferably each made of titanium, steel, or a nickel-based alloy, although this may also vary.

With reference again to FIGs. 2, 3, and 5, a retention tab 208 extends from the shank 218 of each blade attachment 204. Each retention tab 208 engages a corresponding retention flange 206 when the attachment region 212 of the blade attachment 204 is inserted into the corresponding slot 210. As shown in FIGs. 2, 3, and 5, in the depicted embodiment the retention tabs 208 each extend at least partially axially from the attachment region 212 of a respective blade attachment 204; however, this may vary. The retention tabs 208 are each preferably made of titanium, steel, or a nickel-based alloy, although this may also vary.

When the rotor component 200 is assembled, the retention flanges 206 and retention tabs 208 preferably engage one another. Thus, when the rotor component 200 rotates, each blade attachment 204 is axially held in place inside its corresponding slot 210. During operation, an axial force further urges the retention flanges 206 and the retention tabs 208 together, to further inhibit blade attachment 204 movement in the axial direction. Preferably, the retention flanges 206 and retention tabs 208 prevent any axial movement of the blade attachment 204.

Accordingly, the retention flanges 206 and the retention tabs 208 of the rotor component 200 can help reduce, and preferably prevent, axial movement of the blade attachments 204 during operation. This can be of particular benefit in designs, such as that depicted in FIG. 2, in which the slots 210 are sloped with respect to an engine axis, and/or in other situations that might otherwise result in unwanted movement of the blade attachments 204. Moreover, the retention flanges 206 and retention tabs 208 are integral to the design, and can potentially withstand relatively high retention loads while minimizing any additional space and weight required, for example compared to more bulky retention devices.

In addition, the design allows for the rotor component 200 to be assembled and disassembled without removing the engine from its environment. For example, in an aircraft environment, the rotor component 200 can be assembled and disassembled on-wing, thereby making assembly, disassembly, inspection, and/or repair potentially easier and/or less expensive. The rotor component 200 can also be implemented in various different components of various different types of gas turbine engines, for example in a fan section, a compressor section, a turbine section, and/or an axle section, and can also be implemented in any of numerous other different environments.

While the invention has been described with reference to a preferred embodiment, it will be understood by those skilled in the art that various changes may be made and equivalents may be substituted for elements thereof without departing from the scope of the invention. In addition, many modifications may be made to adapt to a particular situation or material to the teachings of the invention without departing from the essential scope thereof. Therefore, it is intended that the invention not be limited to the particular embodiment disclosed as the best mode contemplated for carrying out this invention, but that the invention will include all embodiments falling within the scope of the appended claims.

## Claims

1. A component (200) for a gas turbine engine (100), the component (200) comprising:
a rotor disk (202) having a plurality of slots (210) formed in an outer surface (209) thereof;
a plurality of blade attachments (204), each blade attachment (204) having an attachment region (212) configured to be partially disposed within one of the slots (210);
a plurality of retention flanges (206) extending from the rotor disk (202) outer surface (209), to thereby at least inhibit axial movement of the blade attachment (204), when the attachment region (212) is fitted inside its corresponding slot (210); and
a retention tab (208) extending from each attachment region (212) and engaging one of the retention flanges (206).

2. The component (200) of Claim 1, wherein the attachment region (212) of each blade attachment (204) is configured to be slidably disposed within one of the slots (210).

3. The component (200) of Claim 2, wherein the attachment regions (212) of each blade attachment (204) are configured to be slidably disposed within a different slot (210).

4. The component (200) of Claim 1, wherein:
the retention flanges (206) each extend at least partially radially from the rotor disk (202) outer surface (209); and
the retention tabs (208) each extend at least partially axially from a respective attachment region (212).

5. The component (200) of Claim 1, wherein the component (200) is configured to be implemented in a fan section (102) of an engine (100).

6. The component (200) of Claim 1, wherein the component (200) is configured to be implemented in a turbine section (108) of an engine (100).

7. The component (200) of claim 1, wherein the component (200) is configured to be implemented in a compressor section (104) of an engine (100).

8. The component of Claim 1, wherein the plurality of retention flanges (206) and the retention tabs (208) are made at least in part from one or more of the following metals: titanium, steel, or a nickel-based alloy.

9. A fan section (102) for a gas turbine engine (100), the fan section comprising:
an inlet adapted to receive air from a surrounding environment;
a rotor disk (202) having a plurality of slots (210) formed in an outer surface (209) thereof;
a plurality of blade attachments (204), each blade attachment (204) having an attachment region (212) configured to be partially disposed within one of the slots (210);
a plurality of retention flanges (206) extending from the rotor disk (202) outer surface (209), to thereby at least inhibit axial movement of the blade attachment (204), when the attachment region (212) is fitted inside its corresponding slot (210); and
a retention tab (208) extending from each attachment region (212) and engaging one of the retention flanges (206).

10. A gas turbine engine (100) comprising:
a compressor (120, 122) having an inlet and an outlet and operable to receive accelerated air through the inlet, compress the accelerated air, and supply the compressed air through the outlet;
a combustor (124) coupled to receive at least a portion of the compressed air from the compressor (120, 122) outlet and operable to supply combusted air;
a turbine (126, 128, 130) coupled to receive the combusted air from the combustor (124) and at least a portion of the compressed air from the compressor (120, 122) and to generate energy therefrom; and
a fan section (102) comprising:
an inlet adapted to receive air from a surrounding environment;
a rotor disk (202) having an outer surface (209) forming a plurality of slots (210);
a plurality of blades attached to the rotor disk (202), each blade having an attachment region (212) configured to attach the blade to the rotor disk (202) by fitting within a corresponding slot (210), the plurality of blades configured to accelerate a portion of the air and supply the accelerated air to the compressor (120, 122);
a plurality of retention flanges (206) extending from the rotor disk (202) outer surface, to thereby at least inhibit axial movement of the blade attachment (204), when the attachment region (212) is fitted inside its corresponding slot (210); and
a retention tab (208) extending from each attachment region (212) and engaging one of the retention flanges (206).
